# EUROPEAN PATENT APPLICATION

(11) **EP 4 492 067 A1**
(43) Date of publication of application: **15.01.2025**
(21) Application number: 23796006.7
(22) Date of filing: 31.03.2023
(51) Int. Cl.: G01N 35/04, G01N 35/02

(54) **CONVEYANCE DEVICE, ANALYSIS SYSTEM, PROGRAM FOR CONVEYANCE DEVICE, AND CONVEYANCE METHOD**

(30) Priority: 27.04.2022 JP 2022073512
(71) Applicant: HORIBA, Ltd., Kyoto-shi Kyoto 601-8510 (JP)
(72) Inventor: TATEWAKI, Yasuhiro, Kyoto-shi, Kyoto 601-8510 (JP); MORI, Tetsuya, Kyoto-shi, Kyoto 601-8510 (JP)
(74) Representative: Isarpatent
(86) International application number: PCT/JP2023/013580
(87) International publication number: WO 2023/210259

(57) **Abstract**

To provide a conveyance device that is more user-friendly than conventional devices, and further enhance workability, a conveyance device 102 that conveys a container Z accommodating a sample to an analysis device 101 includes: a pallet 10 in which a plurality of installation portions 11 is provided, the container Z being installed in the installation portions 11; sensors 20 that are provided for the respective installation portions 11 in one-to-one correspondence, and acquire container information that is information obtained when the container Z is installed; a conveyance unit 30 that picks up the container Z installed in the pallet 10, and conveys the container Z to the analysis device 101; and a conveyance control unit 42 that causes the conveyance unit 30 to pick up the container Z in accordance with a pick-up order determined on the basis of the container information.

## Description

### Technical Field

The present invention relates to a conveyance device, an analysis system, a program for conveyance device, and a conveyance method.

### Background Art

For example, in a case where a particle size distribution or the like is analyzed, a sample held in a container is loaded into a sample loading space of an analysis device, and the analysis is then started, as disclosed in Patent Literature 1.

The analysis device includes a conveyance unit called a turntable on which a plurality of installation portions is provided along the circumference, and containers are installed in the installation portions. As the turntable is rotated, the containers are sequentially conveyed to a position above the sample loading space so that the analysis is automated.

Although conveyance of containers is automated, the containers should not be randomly installed in vacant installation portions, and the containers need to be arranged in a circumferential direction in accordance with the order of the containers to be analyzed. Therefore, it cannot be said that the level of automation has reached the level required by users.

### Citation List

### Patent Literature

Patent Literature 1: JP 2016-218048 A

### Summary of Invention

### Technical Problem

Therefore, the present invention is to solve the above-described problem, and aims to further enhance workability by providing a conveyance device that is more user-friendly than conventional devices.

### Solution to Problem

Specifically, a conveyance device according to the present invention is a conveyance device that conveys a container accommodating a sample to an analysis device, the conveyance device including: a pallet in which a plurality of installation portions is provided, the containers being installed in the installation portions; a sensor that is provided for each of the installation portions in one-to-one correspondence, and acquires container information that is information obtained when the container is installed; a conveyance unit that picks up the container installed in the pallet, and conveys the container to the analysis device; and a conveyance control unit that causes the conveyance unit to pick up the container in accordance with a pick-up order determined on the basis of the container information.

With the conveyance device designed as above, the pick-up order is determined on the basis of the container information obtained when the containers are installed in the installation portions of the pallets. Accordingly, when the times at which the containers have been installed are used as the container information, for example, the order in which the containers have been installed can be set as the pick-up order. When the times at which the samples have been sampled in the containers are used as the container information, the order in which the samples have been sampled in the containers can be set as the pick-up order.

That is, as long as how to determine the pick-up order from the container information has been designed, the user is only required to install containers in vacant installation portions, and after that, the containers are conveyed to the analysis device in the pick-up order that is automatically determined. Thus, user-friendliness is higher than before, and workability can be further enhanced.

Meanwhile, in a case where the turntable described in Background Art is used, it is necessary to stop the turntable in order to install a new container on the rotating turntable. If the turntable is not to be stopped, it is necessary to install all the analysis target containers on the turntable before analysis, and the degree of freedom during work is low.

Therefore, when a new container is installed in one of the installation portions of the pallet after conveyance of the container to the analysis device by the conveyance unit is started, the conveyance control unit preferably determines a pick-up order of the new container on the basis of the container information about the new container.

With such a configuration, as long as a new container is installed in the pallet even during analysis, for example, the new container is conveyed to the analysis device, and thus, workability can be further enhanced.

In addition to the sensor, the conveyance device preferably further includes a second sensor that acquires analysis-related information including at least information regarding the sample or information regarding a condition for analysis of the sample.

In such a configuration, the sensors provided for the respective installation portions in one-to-one correspondence may be sensors capable of simply detecting the presence or absence of the containers, for example, and thus, the device cost can be lowered.

Specific modes may include a mode in which the second sensors are provided for the respective installation portions in one-to-one correspondence, or a mode in which the second sensor is shared by a plurality of the containers.

For example, in a conventional particle size distribution measuring device or the like, the analysis conditions to be set in the device, such as the refractive index and calculation parameters, vary with samples. Therefore, it is necessary to create a table of analysis conditions to be set in the device in accordance with the order of samples to be analyzed, and rewrite the table when a sample is changed or added. There also is a need for automation in this respect.

Therefore, the container information preferably includes the analysis condition corresponding to the sample accommodated in the container.

In such a configuration, the analysis condition included in the container information is output to the analysis device, so that the analysis condition suitable for the sample accommodated in the container can be automatically set. Thus, the necessity to create or rewrite the above-mentioned table can be eliminated, and the analysis can be further automated.

A specific mode of the sensor may be one of a reading unit that acquires the container information by reading an identification code attached to the container, or an imaging unit that acquires the container information by imaging the container.

The conveyance device preferably has an interrupt function of preferentially conveying a container different from the container to be picked up in accordance with the pick-up order, to the analysis device regardless of the pick-up order.

With such a configuration, the pick-up order of the containers can be flexibly changed.

The container information preferably includes a file name to be used when a result of analysis of the sample accommodated in the container is saved.

With such a configuration, an operation of manually inputting a file name can be omitted, and analysis can be further automated.

The conveyance control unit preferably acquires position information indicating the position of the installation portion at which the sensor is provided, together with the container information obtained by the sensor, and controls the conveyance unit, using the pick-up order determined on the basis of the container information, and the position information.

With this configuration, a higher level of automation than before can be achieved, and the design is simpler.

A specific mode for determining the pick-up order is a mode in which the container information includes a sampling time that is the time at which the sample has been sampled in the container, and the conveyance control unit determines the pick-up order so that the containers are picked up in chronological order of the sampling time.

Further, another mode is a mode in which the container information includes a detection time that is the time at which the container has been detected by the sensor, and the conveyance control unit determines the pick-up order so that the containers are picked up in chronological order of the detection time.

The conveyance device preferably further includes a reporting unit that is provided for each of the installation portions in one-to-one correspondence, and reports whether the sensor has acquired the container information.

With such a configuration, it is possible to recognize at a glance whether the container information about the installed container has been acquired, and work errors and the like can be reduced.

An analysis system according to the present invention includes the above-described conveyance device and an analysis device that analyzes physical properties of the sample. With such a configuration, it is possible to achieve the same functions and effects as those of the above-described conveyance device.

The conveyance unit and the analysis device preferably start operating when the container is installed in one of the installation portions of the pallet.

In such a configuration, as long as containers are installed in a vacant pallet, for example, the conveyance unit and the analysis device cooperate to advance the analysis thereafter, and therefore, even an operation of pressing an analysis start button for starting analysis can be omitted.

The analysis system preferably includes a plurality of the analysis devices, the container information preferably includes device information for identifying the analysis device to which the container is to be conveyed, and the conveyance unit preferably conveys the container to the analysis device indicated by the device information.

With such a configuration, the sample to be analyzed can be automatically conveyed to an appropriate analysis device of the plurality of analysis devices.

In one mode of the analysis system, the analysis device analyzes the sample accommodated in the container, to switch mode to a learning analysis mode in which the analysis condition used in the analysis is stored as the container information.

With such a configuration, the setting of analysis conditions can be automated.

A program for a conveyance device according to the present invention is a program to be used in a conveyance device that conveys a container accommodating a sample to an analysis device, the conveyance device including: a pallet in which a plurality of installation portions is provided, the containers being to be installed in the installation portions; a sensor that is provided for each of the installation portions in one-to-one correspondence, and acquires container information that is information obtained when the container is installed; and a conveyance unit that picks up the container installed in the pallet, and conveys the container to the analysis device, the program causing a computer to execute a function as a conveyance control unit that causes the conveyance unit to pick up the containers in accordance with a pick-up order determined on the basis of the container information.

A conveyance method according to the present invention is a conveyance method for conveying a container accommodating a sample to an analysis device, and the conveyance method includes: installing the container in one installation portion of a plurality of installation portions provided in a pallet; acquiring container information with a sensor that is provided for each of the installation portions in one-to-one correspondence, the container information being information obtained when the container is installed; and causing the conveyance unit to pick up the container installed in the pallet in accordance with a pick-up order determined on the basis of the container information, and convey the container to the analysis device.

By the conveyance device program and the conveyance method described above, the same functions and effects as those of the conveyance device described above can be achieved.

### Advantageous Effects of Invention

According to the present invention described above, it is possible to provide a conveyance device that is more user-friendly than conventional devices, and workability can be further enhanced.

### Brief Description of Drawings

FIG. 1 is a schematic diagram illustrating the configuration of an analysis system according to an embodiment of the present invention.
FIG. 2 is a schematic diagram illustrating the configuration of an analysis device according to the embodiment.
FIG. 3 is a schematic diagram illustrating a peripheral structure of installation portions according to the embodiment.
FIG. 4 is a functional block diagram illustrating functions of a control device according to the embodiment.
FIG. 5 is a schematic diagram for explaining an interrupt execution unit according to another embodiment.
FIG. 6 is a schematic diagram illustrating the configuration of an analysis system according to another embodiment.
FIG. 7 is a schematic diagram illustrating an example of contents displayed by a display unit according to another embodiment.

### Description of Embodiments

In the description below, an embodiment of a conveyance device according to the present invention will be explained with reference to the drawings.

### <System configuration of the present embodiment>

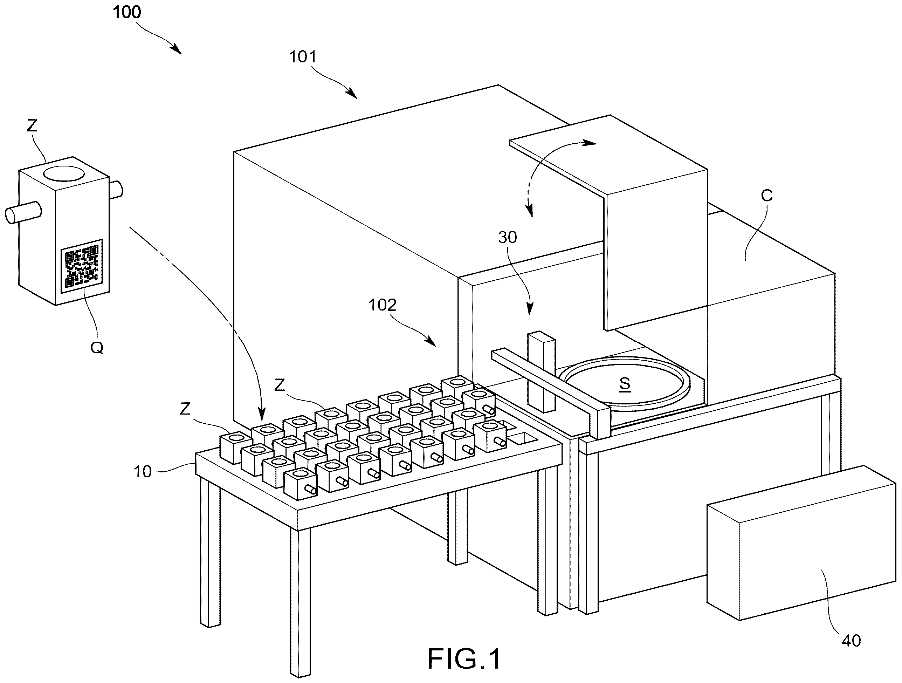

As illustrated in FIG. 1, a conveyance device 102 of the present embodiment conveys a container Z containing a sample to an analysis device 101, and, together with the analysis device 101, constitutes an analysis system 100.

First, the analysis device 101 is briefly described.

The analysis device 101 analyzes physical properties of a sample, and examples thereof include a particle size distribution measuring device that measures a particle size distribution of a sample.

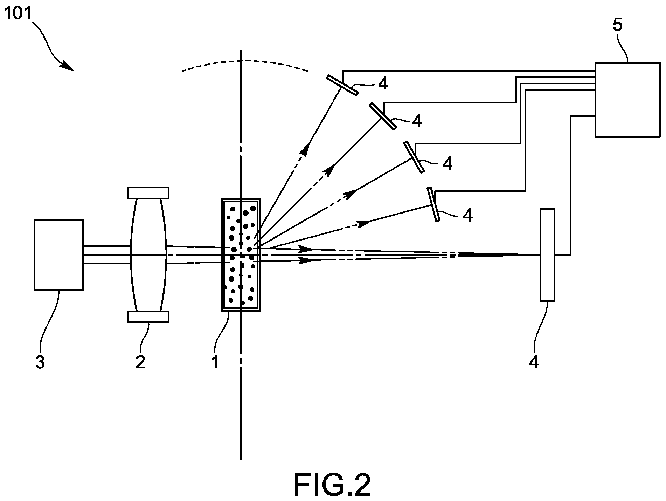

As illustrated in FIG. 2, the particle size distribution measuring device 101 is of a so-called diffraction/scattering type that is designed to measure a particle size distribution by detecting diffracted/scattered light, taking advantage of the fact that the light intensity distribution corresponding to the divergence angle of diffracted/scattered light generated when the particles are irradiated with light is determined by the particle size from the MIE scattering theory.

Specifically, this includes: a laser device as a light source 3 that irradiates a sample in a cell 1 containing the sample with laser light via a lens 2; a plurality of photodetectors 4 that detects light intensity of diffracted/scattered light generated by irradiation of the laser light, in accordance with the divergence angle; and an arithmetic unit 5 that receives a light intensity signal output from each of the photodetectors 4 and calculates a particle size distribution.

Note that the sample of the present embodiment is powder, a gel-like substance, or a solution, and is stored in the cell 1 in a state of being dispersed in a solvent (an organic solvent such as water or ethanol, for example).

As illustrated in FIG. 1, the analysis device 101 of the present embodiment includes a casing C that accommodates the above-described various components, and is designed so that the portion of the casing C facing a sample introduction space S into which the sample is to be introduced can be opened. The sample introduced into the sample introduction space S then flows into the cell 1.

In the vicinity of the analysis device 101, the conveyance device 102 that conveys the container Z containing the sample to the analysis device 101 is provided to automatically introduce the sample into the sample introduction space S.

The conveyance device 102 is characteristic of the present embodiment, and therefore, will be further described below in detail.

As illustrated in FIG. 1, the conveyance device 102 includes: a pallet 10 on which the container Z accommodating the sample is installed; sensors 20 provided on the pallet 10; a conveyance unit 30 that conveys the container Z to the analysis device 101; and a control device 40 that controls the conveyance unit 30.

The container Z has an upper end opened and a lower end closed, for example. Here, a plurality of containers Z having the same shape is prepared. Note that, in the plurality of containers Z, different kinds of samples may be stored, or the same samples may be stored. Also, all of the plurality of containers Z do not necessarily have the same shape, and the shape is not limited to a tubular shape and may be changed to various shapes as appropriate.

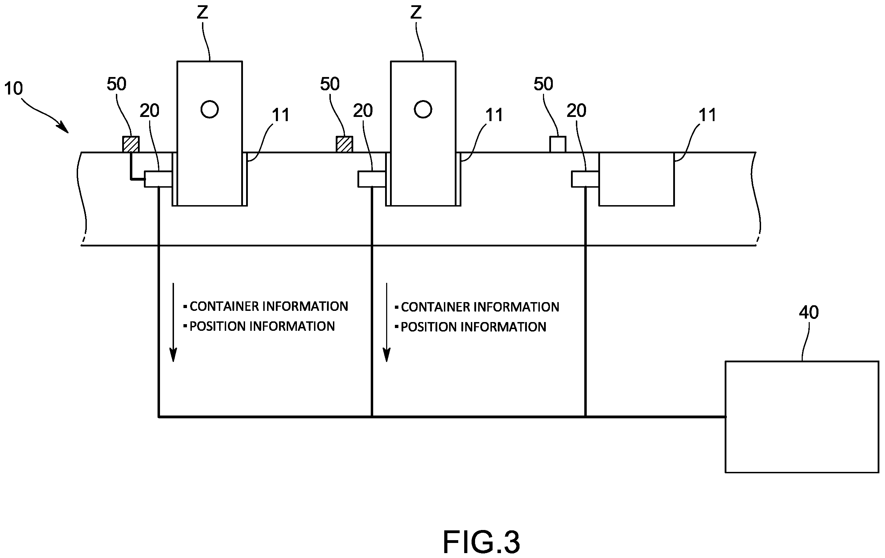

As illustrated in FIG. 3, the pallet 10 has a plurality of installation portions 11 in which the containers Z are installed, and the installation portions 11 here are recesses that accommodate part or all of the containers Z. Note that the installation portions 11 are not necessarily recesses as long as there is a container placement surface on which the containers Z can be placed, and may be protrusions, flat portions, or the like, for example. Examples of shapes of the pallet 10 include various shapes such as a table-like shape, a platform-like shape, a flat panel-like shape, a block-like shape, and a box-like shape.

The sensors 20 acquire container information that is information obtained by installing the containers Z in the installation portions 11, and are provided for the respective installation portions 11 in one-to-one correspondence, as illustrated in FIG. 3.

Each of the sensors 20 is designed to output the acquired container information to the control device 40 described later, and specifically, before being output to the control device 40, the acquired container information is associated with position information indicating the positions (coordinates) of the installation portions 11 at which the sensors 20 are provided.

Each sensor 20 is capable of detecting the presence or absence of the container Z in each corresponding installation portion 11, and may detect the container Z or read information attached beforehand to the container Z.

The sensors 20 that detect the containers Z may be imaging units that image the containers Z, optical sensors that detect the containers Z with light, contact sensors that detect the container Z in contact therewith, weight sensors that detect the weights of the containers Z, magnetic sensors that detect IC chips or the like attached beforehand to the containers Z, or the like, for example.

In a case where imaging units are used as the sensors 20, the image indicated by imaging data, the imaging time at which the imaging data has been obtained (in other words, the detection time at which the container Z has been detected), or the like can be used as the container information. In a case where the sensors 20 of any of the above various kinds are used, the detection time at which the container Z has been detected can be used as the container information, for example.

On the other hand, the sensors 20 that read the information attached to the containers Z may be reading units such as readers that read identification codes such as barcodes or QR codes attached to the containers Z, for example, and, in the embodiment described below, a case where the reading units are used as the sensors 20 is described in detail.

In the present embodiment, as illustrated in FIG. 1, identification codes are attached beforehand to the containers Z before being installed in the installation portions 11, and the identification codes are read by the reading units, so that various kinds of information regarding the sample can be acquired as the container information.

As illustrated in FIG. 3, the sensors 20 as the reading units are provided at the respective corresponding installation portions 11. For example, in a case where an identification code is attached to the outer peripheral surface of each container Z, the sensor 20 may be provided on the inner peripheral surface surrounding the installation portion 11. In a case where an identification code is attached to the bottom surface of each container Z, the sensor 20 may be provided on the container placement surface at the installation portion 11.

In this embodiment, the sampling time at which the sample has been sampled in the container Z is used as the container information to be acquired by reading the identification code. Note that, in another mode, a number indicating an order in which the sample stored in the container Z is analyzed, the read time at which the identification code has been read (in other words, the detection time at which the container Z has been detected), or the like may be used as the container information.

Further, the container information in this embodiment includes the conditions for analysis of the sample stored in the container Z. Such analysis conditions include measurement conditions to be used by the arithmetic unit 5 of the analysis device 101 described above, and a measurement sequence related to the analysis procedures and settings. The measurement conditions may include a physical property value that varies with each sample, such as the refractive index of the sample, the number of repetitions of calculation, the number of times data fetching is to be performed, or the like. The measurement sequence may include the intensity or time of the ultrasonic wave to be applied to the sample, the circulation rate of the sample, or the like.

Further, the container information includes the file name to be used when a result of analysis of the sample stored in the container Z is saved, and the file name may include, as a part thereof, the name of the sample, the sampling time of the sample, the number indicating the order in which the sample is analyzed, or the like, for example.

Here, as illustrated in FIG. 3, the conveyance device 102 of the present embodiment further includes reporting units 50 that report whether the above various sensors 20 have acquired the container information.

The reporting units 50 are provided for the respective corresponding installation portions 11, and emit light, sound, vibration, or the like, for example, to report that the sensors 20 have acquired the container information.

As a mode of the reporting unit 50, a light source that is connected to the sensor 20 and switches lighting states when the sensor 20 acquires the container information can be taken as an example. More specifically, a mode in which one of a light-on state and a light-off state is switched to the other, or colors are changed can be taken as an example.

The conveyance unit 30 picks up the container Z installed in the installation portion 11, and conveys the container Z to the analysis device 101. Specifically, the conveyance unit 30 conveys the picked-up container Z to a preset target location above the sample introduction space S, for example.

Specifically, as illustrated in FIG. 1, the conveyance unit 30 is a conveyance robot that is capable of three-dimensional operations, and is of a so-called triaxial arm type including three arms orthogonal to one another in this embodiment. However, specific modes of the conveyance unit 30 are not limited to this, and various types of conveyance robots such as a conveyance robot capable of two-dimensional operations and an articulated robot including a plurality of arms may be used, for example.

Also, the conveyance unit 30 may be designed to tilt the container Z conveyed to the target location set above the sample introduction space S or the like, and introduce the sample accommodated in the container Z into the sample introduction space S. An example of such a conveyance unit 30 may include a gripping unit that grips the container Z, and the gripping unit is designed to be rotatable about a predetermined rotation axis, for example.

The control device 40 is physically a general-purpose or dedicated computer including a CPU, a memory, an AD converter, and the like, and is connected to the above-described sensors 20 in a wired or wireless manner. Here, the control device 40 is also capable of communicating with the above-described analysis device 101 in a wired or wireless manner.

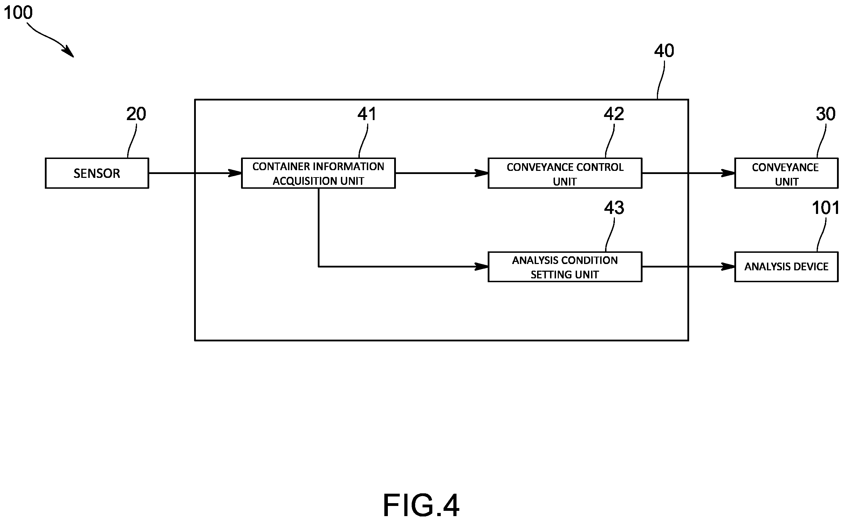

As the CPU cooperates with its peripheral devices in accordance with a conveyance device program stored in the memory, the control device 40 functions as a container information acquisition unit 41 that acquires container information output from the sensor 20, a conveyance control unit 42 that controls the conveyance unit 30, and an analysis condition setting unit 43 that sets analysis conditions in the analysis device 101 as illustrated in FIG. 4.

The container information acquisition unit 41 acquires various pieces of container information output from the sensor 20, outputs the pieces of container information related to conveyance of the containers Z to the conveyance control unit 42, and outputs the pieces of container information related to analysis of the sample to the analysis condition setting unit 43.

The conveyance control unit 42 causes the conveyance unit 30 to pick up the containers Z in accordance with a pick-up order determined on the basis of the container information, and here, is designed to determine the pick-up order on the basis of the container information received from the container information acquisition unit 41.

More specifically, in the present embodiment, the sampling time of the sample is used as the container information, and the conveyance control unit 42 determines the pick-up order so that the containers Z are picked up in chronological order of sampling times, for example.

Note that, in a case where numbers indicating the order in which the samples stored in the containers Z are to be analyzed are used as the container information, the conveyance control unit 42 may determine the pick-up order so that the containers Z are picked up in ascending order of the numbers.

Further, in a case where the detection times at which the containers Z have been detected are used as the container information, the conveyance control unit 42 may set the pick-up order so that the containers Z are picked up in chronological order of the detection times, for example.

As described above, while the container information according to the present embodiment is associated with the position information about the sensors 20 that have acquired the container information, the conveyance control unit 42 acquires, as well as the container information, the position information associated with the container information, and controls the conveyance unit 30, using the pick-up order determined on the basis of the container information, and the position information.

Meanwhile, even if there is an empty installation portion 11 in the pallet 10 after the conveyance of the containers Z is started, a new container Z can be installed in the empty installation portion 11. Accordingly, the necessity to install all the containers Z before the start of analysis is eliminated, and workability can be enhanced.

Therefore, in the present embodiment, in a case where a new container Z is installed in a vacant installation portion 11 of the pallet 10 after the conveyance of the container Z to the analysis device 101 by the conveyance unit 30 is started, the conveyance control unit 42 determines the pick-up order of the new container Z, on the basis of the container information about the installed new container Z.

Specifically, in a case where the container Z is set in the installation portion 11, the sensor 20 corresponding to the installation portion 11 acquires the container information and outputs the container information to the control device 40, regardless of whether it is after the start of conveyance of the container Z or during analysis, and the conveyance control unit 42 determines the pick-up order on the basis of the container information.

The analysis condition setting unit 43 sets analysis conditions in the analysis device 101, on the basis of the container information received from the container information acquisition unit 41.

Specifically, the analysis condition setting unit 43 is designed to output physical property values such as the refractive index of the sample included in the container information to the analysis device 101, and set the physical property values therein. Here, other calculation parameters included in the container information are also output to and set in the analysis device 101.

The analysis condition setting unit 43 according to the present embodiment acquires the pick-up order determined by the above-described conveyance control unit 42, and sequentially outputs the analysis conditions of the samples accommodated in the respective containers Z to the analysis device 101 in accordance with the pick-up order.

That is, the order of picking up the containers Z matches the order of outputting the analysis conditions of the samples accommodated in the respective containers Z to the analysis device 101.

As a result, in the analysis device 101, an analysis condition table in which the analysis conditions to be used in analyzing the respective samples are listed in chronological order is created, and the analysis condition corresponding to the sample to be analyzed is referred to and set from the analysis condition table.

In such a configuration, the arithmetic unit 5 of the analysis device 101 calculates the particle size distribution of the particles contained in the container Z, using the physical property values and the calculation parameters set by the analysis condition setting unit 43, and stores the analysis result under a predetermined file name.

Here, the analysis condition setting unit 43 according to the present embodiment is designed to also output the file name of the analysis result included in the container information to the analysis device 101, and this file name is also included in the above-described analysis condition table as the data to be used in analyzing each sample.

As a result, the arithmetic unit 5 refers to the file name corresponding to the sample analyzed from the analysis condition table, outputs the analysis result of the sample under the file name referred to, and saves the analysis result in a predetermined area in the memory.

### <Effects of the present embodiment>

With the conveyance device 102 designed as described above, the pick-up order is determined herein in chronological order of the sampling times of the samples, on the basis of the container information obtained when the containers Z are installed in the installation portions 11 of the pallet 10. Therefore, as long as the user installs a container Z in a vacant installation portion 11, the container Z is then conveyed to the analysis device 101 in the automatically determined pick-up order, which is more user-friendly than before and enhances workability.

Furthermore, even in a case where a new container Z is installed in an installation portion 11 of the pallet 10 after conveyance of containers Z to the analysis device 101 by is started by the conveyance unit 30, the conveyance control unit 42 determines the pick-up order of the new container Z on the basis of the container information about the new container Z. Thus, as long as a new container Z is installed in the pallet 10 even during analysis, for example, the container Z can be automatically conveyed to the analysis device 101, and workability can be enhanced.

Further, the container information includes the analysis condition corresponding to the sample accommodated in the container Z, and the analysis condition setting unit 43 outputs the analysis condition to the analysis device 101 to set the analysis condition therein, so that the analysis condition suitable for the sample accommodated in each container Z can be automatically set.

Thus, the necessity to manually create or rewrite the analysis condition table can be eliminated, and the analysis can be further automated.

Furthermore, since the container information includes the file name to be used when the analysis result of the sample accommodated in the container Z is saved, the operation of manually inputting the file name can be omitted, and the analysis can be further automated.

In addition to the above, the conveyance control unit 42 controls the conveyance unit 30 using the pick-up order determined on the basis of the container information and the position information. Thus, a higher level of automation than before can be achieved, and the design is simpler.

Moreover, since the reporting units 50 are provided for the respective installation portions 11 in one-to-one correspondence, it is possible to recognize at a glance whether the container information about the installed containers Z has been acquired.

### <Other embodiments>

Note that the present invention is not limited to the above embodiment.

For example, the conveyance device 102 may have an interrupt function of preferentially conveying a container Z different from the containers Z to be picked up in accordance with the pick-up order, to the analysis device 101 regardless of the pick-up order.

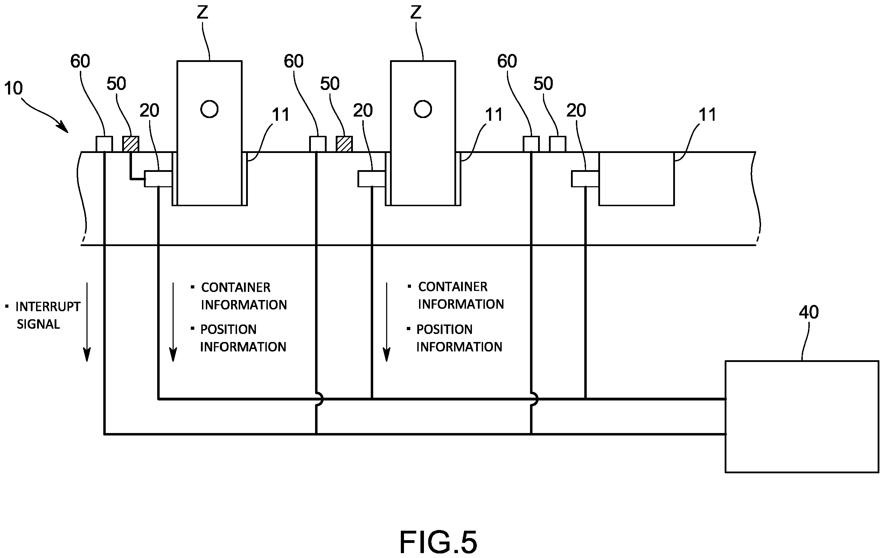

More specifically, as illustrated in FIG. 5, the conveyance device 102 in this case may include interrupt execution portions 60 such as buttons provided at the locations corresponding to the respective installation portions 11, for example, to exert the interrupt function.

In such a configuration, when the operator operates an interrupt execution portion 60, for example, an interrupt signal is input to the control device 40 via the interrupt execution portion, and is accepted by the conveyance control unit 42. The conveyance control unit 42 may then control the conveyance unit 30 to next convey the container Z installed in the installation portion 11 corresponding to the operated interrupt execution portion to the analysis device 101, regardless of the pick-up order determined once. Note that, after the conveyance of the container Z that has been made to interrupt, the conveyance unit 30 may be controlled in accordance with the re-determined pick-up order.

With such a configuration, the pick-up order of the containers Z can be flexibly changed as necessary.

Further, at an analysis site where analysis conditions are substantially unchanged, for example, the container information may not include the analysis conditions.

In this case, the control device 40 does not need to have the functions as the analysis condition setting unit 43 described in the above embodiment, and is not necessarily able to communicate with the analysis device 101.

Also, the conveyance device 102 may be designed so that at least the conveyance unit 30 picks up the containers Z in accordance with a pick-up order determined on the basis of the container information, and conveys the containers Z to the analysis device 101.

Further, the sensor 20 of the above-described embodiment acquires the container information by reading the identification mark attached to the container Z. However, if the sensor 20 has an imaging unit, appearance information about the container Z such as color or shape may be recognized from imaging data obtained by imaging the container Z, for example, and the container information associated with the appearance information may be acquired.

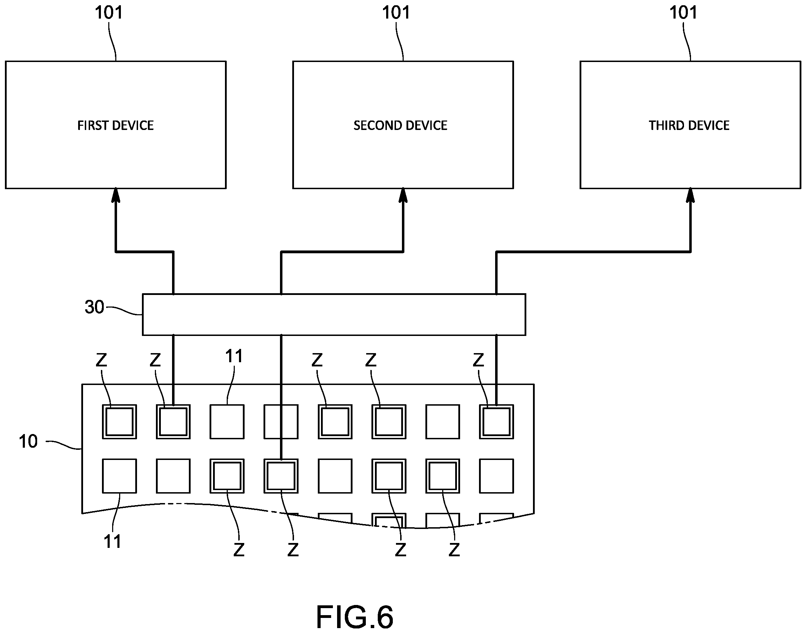

As illustrated in FIG. 6, the analysis system 100 according to the present invention may include a plurality of analysis devices 101 of different kinds or the same kind.

In this case, the container information may include device information for identifying the analysis devices 101 to which the containers Z are to be conveyed, and the conveyance unit 30 may be designed to convey a container Z to the analysis device 101 indicated by the device information.

With such a configuration, the sample to be analyzed can be automatically conveyed to an appropriate analysis device of the plurality of analysis devices 101.

Further, the analysis system 100 according to the present invention may be designed to be switchable to a learning analysis mode in which the sample accommodated in a container Z is analyzed by the analysis device 101, and the analysis condition used in the analysis is stored as the container information.

In this case, when a sample is analyzed in the learning analysis mode, physical property values such as the refractive index of the sample set at the time of the analysis or various calculation parameters can be stored as the analysis conditions into an analysis condition storage unit provided in the analysis device 101, for example.

As a result, the operator can create an identification code with which an analysis condition stored in the analysis condition storage unit can be acquired as the container information at any timing, and attach the identification code to the container Z, and thus, the setting of the analysis condition can be automated.

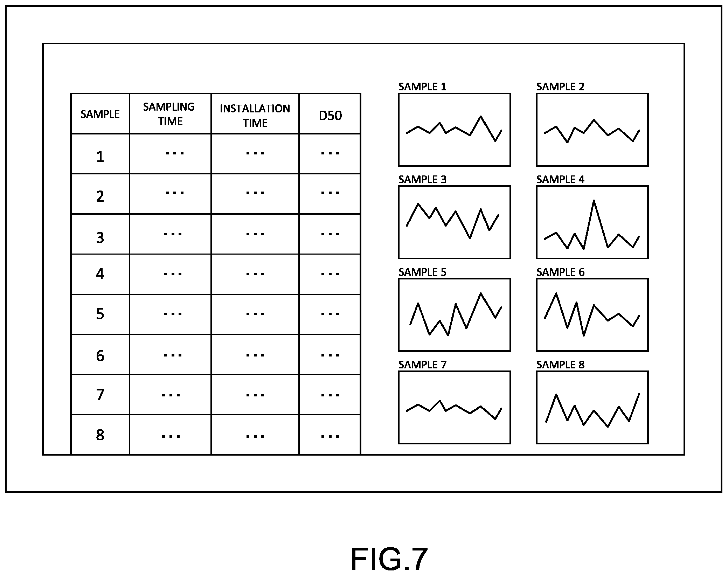

Further, as illustrated in FIG. 7, the analysis system 100 may have a function as a display unit that displays the container information about each sample and the results of analysis of the samples in a comparable manner on a display or the like.

An example of a specific mode of the display unit may be a mode in which container information such as sampling times is displayed in a table, for example, and results of analysis of the samples associated with the respective pieces of the container information are displayed on the same screen as the table.

In addition to the above, reading units such as readers that read identification codes such as QR codes are provided for the respective installation portions 11 in one-to-one correspondence in the above embodiment. However, one common reading unit to be used for a plurality of containers Z may be provided, and sensors 20 that acquire the container information may be provided for the respective installation portions 11, separately from this reading unit.

Further, the conveyance device 102 according to the present invention may include second sensors that read information attached beforehand to the containers Z, separately from the sensors 20, and reading units that read identification codes may be used as the second sensors.

The second sensors acquire analysis-related information such as information regarding the samples accommodated in the containers and information regarding the analysis conditions, for example, separately from the container information obtained by the sensors 20.

In this case, like the sensors 20, the second sensors may be provided for the respective installation portions 11 in one-to-one correspondence, or one common second sensor to be used for the plurality of containers Z may be provided.

An example of an operation to be performed in a case where the second sensor is shared by the plurality of containers Z is as follows.

First, the user sequentially installs a plurality of containers Z accommodating the samples to be measured at the installation portions 11 of the pallet 10.

As a result, the sensors 20 such as imaging units, contact sensors, weight sensors, or magnetic sensors, for example, detect the containers Z installed at the installation portions 11, and outputs the container information indicating the detection to the control device 40, the container information being associated with the position information indicating the position (coordinates) of the installation portions 11 at which the sensors 20 are provided.

Next, the conveyance control unit 42 of the control device 40 causes the conveyance unit 30 to pick up the containers Z in the pick-up order determined on the basis of the container information.

At this point of time, the conveyance control unit 42 controls the conveyance unit 30 to convey the picked-up containers Z to the second sensor before the samples are loaded into the analysis device 101.

As a result, the second sensor reads identification codes such as barcodes or QR codes attached to the containers Z, for example, acquires the above-described analysis-related information, and outputs the analysis-related information to the analysis condition setting unit 43 of the control device 40 or to the analysis device 101.

After that, the conveyance control unit 42 controls the conveyance unit 30 to convey each container Z to the loading position in the vicinity of the analysis device 101, and the sample in the container Z is loaded into the sample loading space of the analysis device 101.

In such a configuration, the second sensor is shared among the plurality of containers Z. Thus, the analysis-related information can be acquired from each of the containers Z, though the number of second sensors is reduced.

In addition to that, an imaging unit capable of imaging the entire pallet 10 may be provided so that the position information about the containers installed in the installation portions 11 can be acquired from imaging data obtained by the imaging unit.

Furthermore, the container information may include information regarding pretreatment that is necessary before the analysis of the samples. In such a mode, the conveyance unit 30 may be designed to perform pretreatment (treatment in which mixing with water or the like is performed, for example) determined on the basis of the container information about the samples accommodated in the containers Z before conveyance of the containers Z picked up from the pallet 10 to the analysis device 101.

Also, the conveyance unit 30 and the analysis device 101 may be designed to start operating when a container Z is installed in an installation portion 11 of the pallet 10.

Specifically, in a case where a container Z is installed in the pallet 10 in which a state in which an empty pallet 10 is left or any new container Z has not been installed continues for a predetermined time, and the container information about the container Z is acquired, for example, the conveyance unit 30 may start conveyance of the container Z in accordance with the pick-up order determined on the basis of the container information, and the analysis device 101 may start analysis of the sample accommodated in the conveyed container Z, using the analysis condition included in the container information.

In such a configuration, as long as the user installs a container Z in the pallet 10, the conveyance unit 30 and the analysis device 101 cooperate to advance the analysis thereafter, and therefore, even an operation of pressing an analysis start button for starting analysis can be omitted.

As for the analysis device 101, a particle size distribution measuring device that uses static light scattering has been described as an example in the above embodiment. However, the present invention is not limited to this, and the analysis device 101 may be a particle size distribution measuring device that uses dynamic light scattering, a particle size distribution measuring device that uses a particle tracking method, an X-ray analysis device, a Raman spectroscopic analysis device, or the like that has analysis conditions changing with samples.

Moreover, the present invention is not limited to the above embodiments, and it goes without saying that various modifications can be made without departing from the scope of the present invention.

### Reference Signs List

- 100: analysis system
- Z: container
- 101: analysis device
- C: casing
- S: sample introduction space
- 102: conveyance device
- 10: pallet
- 11: installation portion
- 20: sensor
- 30: conveyance unit
- 40: control device
- 41: container information acquisition unit
- 42: conveyance control unit
- 43: analysis condition setting unit
- 50: reporting unit

## Claims

1. A conveyance device that conveys a container accommodating a sample to an analysis device, the conveyance device comprising:
a pallet in which a plurality of installation portions is provided, the container being installed in the installation portions;
a sensor that is provided for each of the installation portions in one-to-one correspondence, and acquires container information that is information obtained when the container is installed;
a conveyance unit that picks up the container installed in the pallet, and conveys the container to the analysis device; and
a conveyance control unit that causes the conveyance unit to pick up the container in accordance with a pick-up order determined on a basis of the container information.

2. The conveyance device according to claim 1, wherein, when a new container is installed in one of the installation portions of the pallet after conveyance of the container to the analysis device by the conveyance unit is started, the conveyance control unit determines a pick-up order of the new container on a basis of the container information about the new container.

3. The conveyance device according to claim 1 or 2, further comprising, in addition to the sensor, a second sensor that acquires analysis-related information including at least information regarding the sample or information regarding a condition for analysis of the sample.

4. The conveyance device according to claim 3, wherein the second sensor is provided for each of the installation portions in one-to-one correspondence, or is shared by a plurality of the containers.

5. The conveyance device according to claim 1 or 2, wherein the container information includes an analysis condition corresponding to the sample accommodated in the container.

6. The conveyance device according to any one of claims 1 to 5, wherein the sensor is one of a reading unit that acquires the container information by reading an identification code attached to the container, or an imaging unit that acquires the container information by imaging the container.

7. The conveyance device according to any one of claims 1 to 6, which has an interrupt function of preferentially conveying a container different from the container to be picked up in accordance with the pick-up order, to the analysis device regardless of the pick-up order.

8. The conveyance device according to any one of claims 1 to 7, wherein the container information includes a file name to be used when a result of analysis of the sample accommodated in the container is saved.

9. The conveyance device according to any one of claims 1 to 8, wherein the conveyance control unit acquires position information indicating a position of the installation portion at which the sensor is provided, together with the container information obtained by the sensor, and controls the conveyance unit, using the pick-up order determined on a basis of the container information, and the position information.

10. The conveyance device according to any one of claims 1 to 9, wherein the container information includes a sampling time that is a time at which the sample has been sampled in the container, and
the conveyance control unit determines the pick-up order so that the container is picked up in chronological order of the sampling time.

11. The conveyance device according to any one of claims 1 to 9, wherein the container information includes a detection time that is a time at which the container has been detected by the sensor, and
the conveyance control unit determines the pick-up order so that the container is picked up in chronological order of the detection time.

12. The conveyance device according to any one of claims 1 to 11, further comprising a reporting unit that is provided for each of the installation portions in one-to-one correspondence, and reports whether the sensor has acquired the container information.

13. An analysis system comprising:
the conveyance device according to any one of claims 1 to 12; and
an analysis device that analyzes physical properties of the sample.

14. The analysis system according to claim 13, wherein the conveyance device and the analysis device start operating when the container is installed in one of the installation portions of the pallet.

15. The analysis system according to claim 13 or 14, comprising a plurality of the analysis devices, wherein
the container information includes device information for identifying the analysis device to which the container is to be conveyed, and
the conveyance unit conveys the container to the analysis device indicated by the device information.

16. The analysis system according to any one of claims 13 to 15, wherein the analysis device analyzes the sample accommodated in the container, to switch mode to a learning analysis mode in which an analysis condition used in the analysis is stored as the container information.

17. A program to be used in a conveyance device that conveys a container accommodating a sample to an analysis device, the conveyance device including: a pallet in which a plurality of installation portions is provided, the container being installed in the installation portions; a sensor that is provided for each of the installation portions in one-to-one correspondence, and acquires container information that is information obtained when the container is installed; and a conveyance unit that picks up the container installed in the pallet, and conveys the container to the analysis device;
the program causing a computer to execute a function as a conveyance control unit that causes the conveyance unit to pick up the container in accordance with a pick-up order determined on a basis of the container information.

18. A conveyance method for conveying a container accommodating a sample to an analysis device, the conveyance method comprising:
installing the container in one installation portion of a plurality of installation portions provided in a pallet;
acquiring container information with a sensor that is provided for each of the installation portions in one-to-one correspondence, the container information being information obtained when the container is installed; and
causing the conveyance unit to pick up the container installed in the pallet in accordance with a pick-up order determined on a basis of the container information, and convey the container to the analysis device.
